# EUROPÄISCHE PATENTSCHRIFT

(11) **EP 3 497 047 B1**
(45) Veröffentlichungstag und Bekanntmachung des Hinweises auf die Patenterteilung: **15.11.2023**
(21) Anmeldenummer: 17746443.5
(22) Anmeldetag: 25.07.2017
(51) Int. Cl.: B66C 13/46, G01S 13/88, G01S 13/06

(54) **VERFAHREN UND ANORDNUNG ZUM PLATZIEREN VON STAPELBAREN LAGERUNGSVORRICHTUNGEN**
METHOD AND ARRANGEMENT FOR THE PLACEMENT OF STACKABLE STORAGE MEANS
PROCÉDÉ ET SYSTÈME PERMETTANT DE PLACER DES DISPOSITIFS DE STOCKAGE EMPILABLES

(30) Priorität: 07.10.2016 DE 102016219522
(43) Veröffentlichungstag der Anmeldung: 19.06.2019
(73) Patentinhaber: Siemens Aktiengesellschaft, 80333 München (DE)
(72) Erfinder: BUHL, Michael Bernhard, 85567 Grafing (DE); NEUBAUER, Werner, 81739 München (DE); POPRAWA, Florian, 79100 Freiburg (DE); ROTTMANN, Axel, 81825 München (DE)
(74) Vertreter: Siemens Patent Attorneys
(86) Internationale Anmeldenummer: PCT/EP2017/068740
(87) Internationale Veröffentlichungsnummer: WO 2018/065136

(56) Entgegenhaltungen:
- WO-A1-94/05586
- DATABASE WPI Week 201160 Thomson Scientific, London, GB; AN 2011-J31305 XP002774970, -& KR 2011 0066764 A (JLC CO LTD) 17. Juni 2011 (2011-06-17)

## Beschreibung

Diese Erfindung betrifft ein Verfahren zum Platzieren von stapelbaren Lagerungsvorrichtungen gemäß dem Gattungsbegriff des Anspruchs 1 sowie eine Anordnung zum Platzieren von stapelbaren Lagerungsvorrichtungen dem Gattungsbegriff des Anspruchs 8.

Es ist bekannt, dass an Containerterminals, also Anlagen an der von einem Transportmittel zu mindestens einem weiteren Transportmittel umgeschlagen werden, die Container mittels Kränen bzw. Containerbrücken umgeschlagen werden. Beispielsweise werden unter Anderem Schiffe und Züge be- und entladen. Dabei werden auch Container zur Zwischenlagerung zu sogenannten Stacks gestapelt. Diese Arbeiten erfolgen zum Teil manuell, es gibt zum Teil auch Systeme oder Teilarbeiten, die vollständig autonom durchgeführt werden.

Unabhängig davon wie die Arbeiten ausgeführt werden, ist eine präzise Ablage der Container erforderlich. Hierzu wird zum Teil der Steuerung des, auch als Spreader bezeichneten, Hebezeugs, mit dem die Container zu ihrer endgültigen Position gebracht werden, die bekannte Strecke zugrundegelegt. Wiederrum unabhängig davon ob eine autonome oder manuelle Ausführung vorliegt, weist diese Lösung den Nachteil auf, dass ein sanftes Abstellen der Container trotz dieser Information nicht gelingt.

Die der Erfindung zugrundeliegende Aufgabe besteht darin eine Lösung anzugeben, die die Probleme des Standes der Technik bei der Ablage von Lagerungsvorrichtungen, wie beispielsweise Containern, überwindet.

Aus der WO 94/05586 ist eine Vorrichtung und ein Verfahren zur Steuerung eines Containerkranes bekannt, bei denen mittels mindestens eines Sensors Positionen von Punkten auf einer Kante eines Ladegeschirrs oder eines darin aufgenommenen Containers sowie eines Punktes einer in einem Zielort befindlichen Kante vermessen und in Signale zur Ansteuerung des Kranantriebes umgesetzt werden.

Diese Aufgabe wird durch das Verfahren zum Platzieren von stapelbaren Lagerungsvorrichtungen gemäß dem Anspruch 1 durch dessen Merkmale, sowie durch eine Anordnung zum Platzieren von stapelbaren Lagerungsvorrichtungen gemäß dem Anspruch 8 durch dessen Merkmale gelöst.

Bei dem erfindungsgemäßen Verfahren zum Platzieren von stapelbaren Lagerungsvorrichtungen, beispielsweise Container, Paletten, Kartons und Ähnlichen, auf einer Lagerfläche, insbesondere Stapelanordnungen wie beispielsweise einem so genannten Container Stack, werden bei einem Ablagevorgang mit einer Lagerungsvorrichtung mit zumindest einem Radarsensor eine Kante der Lagerungsvorrichtung detektiert und die für die Lagerungsvorrichtung bestimmte Ablagefläche erfasst, wobei mindestens ein Abstand zwischen der Kante, insbesondere am bezüglich des Ablagevorgangs unteren Ende der Lagerungsvorrichtung, und der Ablagefläche ermittelt wird und wobei eine Steuerung des Ablagevorgangs auf die Ablagefläche auf Grundlage zumindest des ermittelten Abstands erfolgt.

Zur Detektion der Kante erfolgt eine Auswertung von mehreren zeitlich aufeinanderfolgenden Radarbilden, wobei innerhalb der Radarbilder mindestens zwei zurückgeworfene Signale identifiziert werden, bei denen die Reflexionsabstände sich mit einer ein n-Faches der Vorschubgeschwindigkeit betragenden Geschwindigkeit verkleinern und auf Grundlage der Differenz der identifizierten zurückgeworfenen Signale der aktuelle Abstand zur Ablagefläche ermittelt wird.

Hierdurch kann vor allem eine zügige und zugleich sanfte Ablage erreicht werden.

Weitere Vorteile sind durch die in den Unteransprüchen angegebenen Weiterbildungen gegeben

Bei einer erfindungsgemäßen Anwendung des Verfahrens bei Containern überwindet die Erfindung das Hindernis, dass durch benachbarten Stacks die Sicht auf die Lagerfläche in der Regel eingeschränkt und insbesondere seitlich nicht möglich ist. Ferner stellt die Erfindung eine Lösung bereit, die eine Erfassung des Bereichs von oben ermöglicht, obwohl das Zielgebiet durch den Container selbst verdeckt wird. Damit kann durch das erfindungsgemäße Verfahren der Abstand im Gegensatz zu einem auf optische Erfassung beruhenden autonom oder durch einen den Operator gesteuerten System trotz der Hindernisse ermittelt werden.

Ferner ermöglicht das erfindungsgemäße Verfahren, dass der aktuell vorliegende Abstand ermittelt wird, weil es bisherige Lösungen bei denen die Abstandsbestimmung auf Werten beruht, welche vorab mit optischen Systemen ermittelt wurden. Diese Systeme verlassen sich auf ein nicht ändernde Parameter des Umfelds und nutzen beispielsweise Werte, die ein Laserscanner durch überfahren des Zielgebietes zu einem früheren Zeitpunkt aufgenommen hat, später für das Absetzen des gewünschten Containers. Die Erfindung bietet demgegenüber zum Einen den Vorteil, dass ein die aktuellen Gegebenheiten widergebender Wert ermittelt wird, und zum Anderen spart es Aufwand und Zeit, da gemäß der Erfindung das Zielgebiet nicht vorab schon einmal überfahren werden muss. Zudem kann die Erfindung nicht nur sich am Ablageort ändernde Parameter berücksichtigen, sondern auch die Eigenschaften der Lagerungsvorrichtung berücksichtigen, also bei Container, beispielsweise die Höhe des aktuell aufgenommenen Containers.

Diese Vorteile sind nicht auf die genannte Anwendungsvariante beschränkt, sondern auf allen Einsatzgebieten des erfindungsgemäßen Verfahrens gleichermaßen gegeben und ermöglichen in Summe ein deutlich präziseres Absetzen der Lagerungsvorrichtung.

Bevorzugt wird das erfindungsgemäße Verfahren dabei derart weitergebildet, dass die Geschwindigkeit des Ablagevorgangs einstellbar ist und/oder während des Ablagevorgangs konstant erfasst wird. Diese Weiterbildung ist für die Erfindung besonders geeignet, da hierdurch die Geschwindigkeit bekannt ist und durch diese bekannte Größe es möglich wird aus einer Vielzahl empfangenen zurückgeworfenen Signalen, das- und/oder diejenige/n bestimmen kann, welches die Kante der Lagerungsvorrichtung kennzeichnet. Hiermit wird also eine sehr gute Lösung der Detektion der Kante durch den Radarsensor erreicht.

Alternativ kann auch die Position des Containers bestimmt werden, beispielsweise auch relativ zu einem beliebigen Referenzpunkt.

Alternativ oder ergänzend wird das erfindungsgemäße Verfahren dabei derart weitergebildet, dass der Radarsensor auf dem Hebezeug betrieben wird. Hierdurch ist eine sich mit der durch Hebezeug gefassten Lagerungsvorrichtung synchron bewegende Erfassung von zurückgestrahlten Radarsignalen gegeben, die eine gleichbleibende Präzision der Detektion bietet. Ferner kann hierdurch eine zur Lagerungsvorrichtung konstant bleibende Lage und Ausrichtung des Radarsensors ermöglicht werden, die die Detektion der Kante zum Einen vereinfacht und zum Anderen ebenfalls für eine sehr gute Präzision sorgt.

Die gleichen Vorteile können erzielt werden, wenn alternativ oder ergänzend kann das erfindungsgemäße Verfahren derart weitergebildet wird, dass der Radarsensor auf einer das Hebezeug bewegenden Einrichtung, insbesondere einer so genannten Laufkatze, beispielsweise eines Krans, betrieben wird.

Dabei kann die Zuverlässigkeit der Indikation der Kante, somit also die Qualität der Detektion, gesteigert werden, wenn das erfindungsgemäße Verfahren derart weitergebildet wird, dass eine Vielzahl an Radarsensoren zur Steuerung des Ablagevorgangs betrieben wird. Mit einer Vielzahl von Radarsensoren lässt sich auch die Ablagefläche im Radarbild erfindungsgemäß dadurch detektieren, dass die sich ergebende Vielzahl von Radarbildern derart einer gemeinsamen Analyse unterzogen wird, dass eine Fläche mit gleichbleibendem Abstand im Bild ermittelt wird. Dies ist insbesondere dann vorteilhaft einsetzbar, wenn lediglich das erste Echo der zurückgestrahlten Radarsignale für die Ermittlung der Kante erfasst wird.

Vorzugsweise wird dazu das erfindungsgemäße Verfahren derart weitergebildet, dass zur Detektion der Kante eine Auswertung von bei der Vielzahl der Radarsensoren mindestens ein erstes eingehendes zweites Signal, welches eine Reflektion eines in Richtung Lagerfläche abgegebene ersten Signal repräsentiert, insbesondere anhand der zum gleichen Zeitpunkt sich ergebenden Radarbilder, ausgewertet werden.

Zur Detektion der Kante erfolgt eine Auswertung von mehreren zeitlich aufeinanderfolgenden Radarbildern, wird, insbesondere wenn die Geschwindigkeit und/oder die Position der Lagerungsvorrichtung bekannt bzw. konstant gehalten wird, ein erfindungsgemäßes Detektionsverfahren bereitgestellt. Alternativ oder ergänzend kann das Verfahren derart weitergebildet werden, dass zur Steuerung des Ablagevorgangs durch zumindest einen Radarsensor Mehrfachreflexionen des zweiten Signals zwischen der Lagerfläche und der Lagerungsvorrichtung ausgewertet werden. Hierdurch kann in einer zeitlichen Abfolge von erfassten Radarbildern die Kante leicht erkannt werden, da, insbesondere bei gleichbleibender Bewegungsgeschwindigkeit der Lagerungsvorrichtung, ein charakteristisches und damit einfach zu detektierendes Muster in den Bildern geben ist. Eine gleichbleibende Geschwindigkeit wird dabei dann nicht erforderlich sein, wenn man die Reflexionen über Position aufträgt.

Die erfindungsgemäße Vorrichtung zeichnet sich dadurch aus, dass sie zum Platzieren von stapelbaren Lagerungsvorrichtungen, beispielsweise Container, Palette, Karton und Ähnliche, auf einer Lagerfläche, insbesondere Stapelanordnungen wie beispielsweise einem so genannten Container Stack, Mittel zur Durchführung des vorstehend genannten Verfahrens aufweist.

Durch die Vorrichtung ist die Implementierung des Verfahrens ermöglicht und somit liegt der Vorteil der Vorrichtung darin, dass die durch das erfindungsgemäße Verfahren und seinen Weiterbildungen gegebenen Vorteile jeweils verwirklicht werden.

Weitere Vorteile und Einzelheiten der Erfindung werden nun ausgehend von den in den beiden Figuren näher erläutert. Dabei zeigt die
FIGUR 1 ein für Containerplatzierung mittels einem vereinfachtes Ablaufdiagram dargestelltes nicht beanspruchtes Ausführungsbeispiel
FIGUR 2 eine zur Erläuterung der Wirkweise eines findungsgemäßen Ausführungsbeispiels bei Einsatz im gemäß vorheriger Figur gegebenen Einsatzszenario geeignete Darstellung von Mehrfachreflexionen

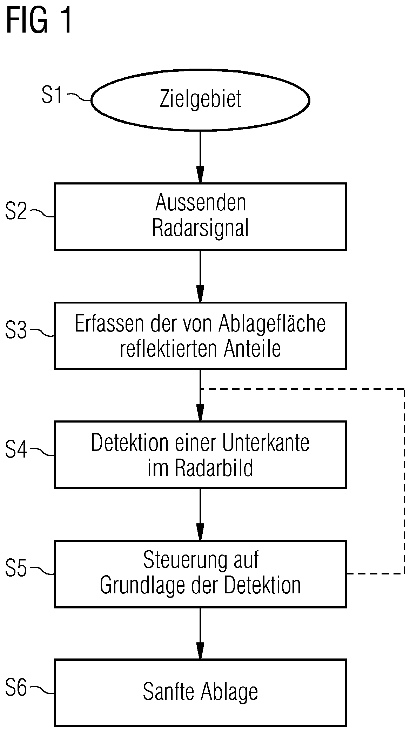

In der FIGUR 1 ist ein einfaches Ablaufdiagram zu sehen. Dieses Ablaufdiagram gibt den besonders geeigneten Einsatz des Verfahrens bei Containern, beispielsweise beim Umladen in einem Hafen, an, wobei dem Ablauf die Ausgestaltung zugrunde liegt, dass ein (oder mehrere) Radarabstandssensoren seitlich am Spreader - alternativ oder ergänzend oben an der Laufkatze - befestigt sind.

Für die Abstandsmessung kann dann als ein einfaches Ausführungsbeispiel des Verfahrens in einem ersten Schritt S1 ermittelt werden, ob sich der Spreader oberhalb des Zielgebietes befindet und somit der Ablagevorgang zum Ablegen des Containers gestartet werden kann. Dies soll hier mit der Bezeichnung des Ausgangszustands im ersten Schritt S1 mit "Zielgebiet" gegeben sein.

Falls dies der Fall ist, wird in einem zweiten Schritt S2 ein Radarsignal ausgesandt, dessen Echo in einem dritten Schritt S3 erfasst wird. In einem sich, insbesondere - angedeutet durch den gestrichelten Pfeil - bis zur Ablage wiederholenden, vierten Schritt S4 wird nun die Unterkannte des Containers detektiert und in einem sechsten Schritt S6 der Steuerung der Ablage zugrundegelegt, die dann in einem zur sanften Ablage in einem fünften Schritt S5 führt.

Hierbei wird ausgenutzt, dass die Verfahrensgeschwindigkeit des Containers bekannt ist.

Damit ist eine direkte Messung des Abstandes zur Ablagefläche gegeben, die darauf beruht, dass sowohl die Unterkante des Containers als auch die geplante Ablagefläche im Radarbild identifiziert werden. Um die Unterkante des Containers im Radarbild zu identifizieren wird dabei ausgenutzt, dass die Geschwindigkeit dieser Kante bekannt ist. Durch Auswerten der Radarbilder über mehrere Zeitpunkte kann daher diese Kante erkannt werden.

Um die Identifikation der Ablagefläche zu verbessern, können mehrere Sensoren vorgesehen sein und dann in Radarbildern von verschiedenen Sensoren nach einer Fläche mit dem gleichen Abstand zur Ablagefläche gesucht werden.

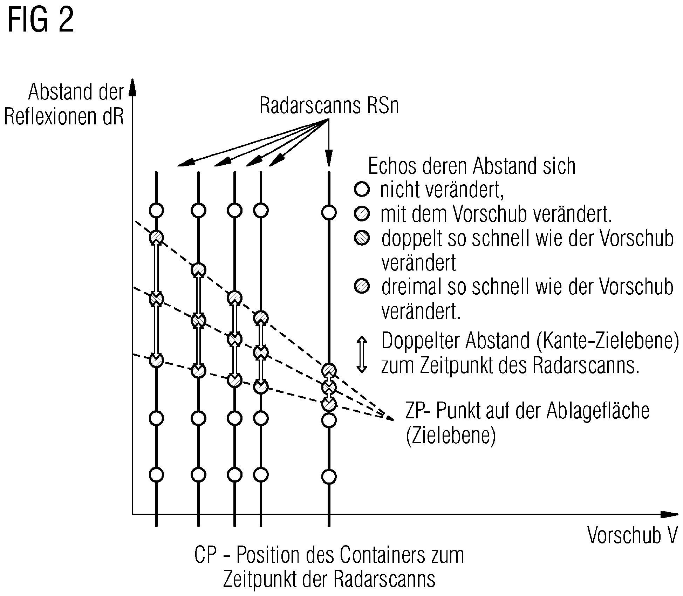

Die FIGUR 2 soll die Wirkweise eines Ausführungsbeispiels der Erfindung verdeutlichen, bei dem eine Ausnutzung von Mehrfachreflektionen zwischen Container und der Abstellfläche erfolgt. Bei dieser Darstellung sind die zu erkennenden Achsen zur Erläuterung des Prinzips dabei zur besseren Darstellung nicht gleich skaliert worden. Bei einer gleichen Skalierung hätte beispielsweise die unterste der dargestellten Geraden einen Winkel von 45°.

Bei dieser verbesserten Darstellung ist dabei zu erkennen, dass der Radarsensor (bzw. Sensoren) nicht nur das erste Echo erfasst, sondern gleichzeitig auch Echos mit einer längeren Laufzeit erfasst werden, auf die die von Radarscanns RSn abgehenden Pfeil verweisen. Dadurch können neben den direkten Entfernungsdaten auch Entfernungen mit Mehrfachreflektionen gemessen werden.

Dabei werden zur Detektion einer Kante mindestens zwei oder mehr aufeinander folgende Radarbilder ausgewertet. Innerhalb der Bilder werden Echos identifiziert deren Abstand sich mit der einfachen, doppelten...n-fachen Geschwindigkeit des Vorschubs V verkleinern, wie durch die hellgrauen, mittelgrauen und dunkelgrauen Punkte in der Darstellung verdeutlicht ist. Konstante Echos, also Echos deren Abstand dR sich nicht verändert (schwarze Punkte) sind nicht von Interesse. Aus der Differenz dieser identifizierten Echos kann direkt auf den interessierenden Abstand zum Zielpunkt ZP auf der Ablagefläche geschlossen werden. Wie durch die sich in dem Zielpunkt treffenden gestrichelten Strahlen verdeutlicht ist. Innerhalb der Bilder werden gemäß dieser Weiterbildung also Echos identifiziert deren Abstand sich mit der einfachen, doppelten, usw. Geschwindigkeit des Vorschubs verkleinern, wobei aus der Differenz dieser identifizierten Echos vorteilhafter Weise direkt auf den interessierenden Abstand geschlossen und der Steuerung zugrundegelegt werden kann. Die Vorgehensweise liefert den Abstand direkt, u.a. weil es ein separates Detektieren der Ablagefläche, beispielsweise mit mehrere Sensoren wie es die weiter oben genannte Weiterbildung vorsieht - erspart. Der aktuelle Abstand ergibt sich dabei aus der Differenz der zum Zeitpunkt des jeweiligen Radarscanns gegebenen Containerposition CP und dem Zielpunkt ZP.

Es werden also hierdurch Abstände gemessen die den doppelten Abstand zwischen Container und Ablagefläche enthalten. (Dargestellt durch die Doppelpfeile). Mit Hilfe der bekannten Bewegungsgeschwindigkeit des Containers kann dieses Muster sehr leicht im Zeitverlauf des Radarsignals klassifiziert und ausgewertet werden, wie die Abbildung einem Fachmann verdeutlicht.

Alternativ kann man, wenn man den Zielpunkt ZP nicht bestimmen kann oder möchte, auch direkt aus den eingezeichneten doppelten Abständen auf den einfachen Abstand schließen.

Bei dem dargestellten Beispiel wird ein wesentlicher Kern der Erfindung deutlich, wonach mindestens ein Radarsensor zur direkten Abstandsmessung zwischen Lagerungsvorrichtung, gemäß Ausführungsbeispiel Container, und seiner Ablagefläche benutzt wird. Insbesondere die erfindungsgemäße Verwendung der bekannten Containergeschwindigkeit und der Mehrfachreflektionen machen das Verfahren im Beispiel aber auch insgesamt sehr robust gegen Fehlmessungen. Der Vorteil eines derartigen Sensors besteht darin, dass Container schnell und sanft abgesetzt werden können. Für manche Situationen kann der Sensor auch zudem für eine Kollisionsvermeidung eingesetzt werden.

Die Erfindung ist nicht auf das dargestellte Beispiel des Verfahrens, oder beschriebenen (Anordnungs-)Varianten eingeschränkt. Vielmehr umfasst sie alle Kombinationen und Ausgestaltungsvarianten, die durch die Ansprüche gegeben sind.

## Patentansprüche

1. Verfahren zum Platzieren von stapelbaren Lagerungsvorrichtungen, beispielsweise Containern, Paletten, Kartons und Ähnlichen, auf einer Lagerfläche, insbesondere Stapelanordnungen wie beispielsweise einem so genannten Container Stack, bei dem bei einem Ablagevorgang mit einer Lagerungsvorrichtung mit zumindest einem Radarsensor eine Kante der Lagerungsvorrichtung detektiert und die für die Lagerungsvorrichtung bestimmte Ablagefläche erfasst wird, wobei mindestens ein Abstand zwischen der Kante, insbesondere am bezüglich des Ablagevorgangs unteren Ende der Lagerungsvorrichtung, und der Ablagefläche ermittelt wird und wobei eine Steuerung des Ablagevorgangs auf die Ablagefläche auf Grundlage zumindest des ermittelten Abstands erfolgt, **dadurch gekennzeichnet, dass** zur Detektion der Kante eine Auswertung von mehreren zeitlich aufeinanderfolgenden Radarbildern erfolgt und wobei innerhalb der Radarbilder mindestens zwei zurückgeworfene Signale identifiziert werden, bei denen die Reflexionsabstände sich mit einer ein n-Faches der Vorschubgeschwindigkeit betragenden Geschwindigkeit verkleinern und auf Grundlage der Differenz der identifizierten zurückgeworfenen Signale der aktuelle Abstand zur Ablagefläche ermittelt wird.

2. Verfahren nach dem vorhergehenden Anspruch, **dadurch gekennzeichnet, dass** die Vorschubgeschwindigkeit des Ablagevorgangs einstellbar und/oder während des Ablagevorgangs konstant erfasst wird und/oder die Positionsänderung während des Ablagevorgangs erfasst wird.

3. Verfahren nach einem der vorhergehenden Ansprüche, **dadurch gekennzeichnet, dass** der Radarsensor auf einem Hebezeug betrieben wird.

4. Verfahren einem der vorhergehenden Ansprüche, **dadurch gekennzeichnet, dass** der Radarsensor auf einer das Hebezeug bewegenden Einrichtung, insbesondere einer so genannten Laufkatze, beispielsweise eines Krans, betrieben wird.

5. Verfahren, nach einem der vorhergehenden Ansprüche, **dadurch gekennzeichnet, dass** eine Vielzahl an Radarsensoren zur Steuerung des Ablagevorgangs betrieben wird.

6. Verfahren nach dem vorhergehenden Ansprüche, **dadurch gekennzeichnet, dass** zur Detektion der Kante eine Auswertung von bei der Vielzahl der Radarsensoren mindestens ein erstes eingehendes zweites Signal, welches eine Reflektion eines in Richtung Lagerfläche abgegebenen ersten Signals repräsentiert, insbesondere anhand der zum gleichen Zeitpunkt sich ergebenden Radarbilder, ausgewertet werden.

7. Verfahren nach dem Anspruch 6, **dadurch gekennzeichnet, dass** zur Steuerung des Ablagevorgangs durch zumindest einen Radarsensor Mehrfachreflexionen des zweiten Signals zwischen der Lagerfläche und der Lagerungsvorrichtung ausgewertet werden.

8. Vorrichtung zum Platzieren von stapelbaren Lagerungsvorrichtungen, beispielsweise Container, Palette, Karton und Ähnliche, auf einer Lagerfläche, insbesondere Stapelanordnungen wie beispielsweise einem so genannten Container Stack, aufweisend Mittel zur Durchführung des Verfahrens nach einem der vorhergehenden Ansprüche.

## Claims

1. Method for placing stackable storage devices, for example containers, pallets, cartons and similar, on a storage area, in particular stacked arrangements such as, for example, a so-called container stack, in which method in a depositing procedure with a storage device an edge of the storage device is detected by at least one radar sensor, and the depositing area specified for the storage device is detected, wherein at least one spacing between the edge, in particular at the lower end of the storage device in terms of the depositing procedure, and the depositing area is determined, and wherein controlling of the depositing procedure onto the depositing area is performed based on at least the determined spacing, **characterized in that**, for detecting the edge, an evaluation of a plurality of temporally successive radar images is performed, and wherein within the radar images at least two returned signals in which the reflection spacings decrease at a speed that is n-times the advancing speed are identified, and the current spacing from the depositing area is determined based on the difference of the identified returned signals.

2. Method according to the preceding claim, **characterized in that** the advancing speed of the depositing procedure is adjustable and/or is constantly detected during the depositing procedure, and/or the positional modification during the depositing procedure is detected.

3. Method according to one of the preceding claims, **characterized in that** the radar sensor is operated on a lifting gear.

4. Method according to one of the preceding claims, **characterized in that** the radar sensor is operated on an installation that moves the lifting gear, in particular on a so-called crab, for example of a crane.

5. Method according to one of the preceding claims, **characterized in that** a multiplicity of radar sensors are operated for controlling the depositing procedure.

6. Method according to the preceding claims, **characterized in that**, for detecting the edge, in the case of the multiplicity of radar sensors an evaluation of at least one first incoming second signal which represents a reflection of a first signal emitted in the direction of the storage area are evaluated in particular by means of the radar images resulting at the same temporal point.

7. Method according to Claim 6, **characterized in that**, for controlling the depositing procedure by at least one radar sensor, multiple reflections of the second signal between the storage area and the storage device are evaluated.

8. Device for placing stackable storage devices, for example containers, pallets, cartons and similar, on a storage area, in particular stacked arrangements such as, for example, a so-called container stack, having means for carrying out the method according to one of the preceding claims.

## Revendications

1. Procédé de positionnement de systèmes de stockage empilables, par exemple des conteneurs, des palettes, des cartons et autres systèmes similaires, sur une surface de stockage, en particulier des blocs empilés, comme par exemple ce qu'on appelle un empilement de conteneurs dans lequel, lors d'un processus de chargement avec un dispositif de stockage, un bord du dispositif de stockage est détecté par au moins un capteur radar et la surface de chargement déterminée pour le dispositif de stockage est détectée, au moins un intervalle est déterminé entre le bord, en particulier à l'extrémité inférieure du dispositif de stockage concernant le processus de chargement, et la surface de chargement, et dans lequel une commande du processus de chargement sur la surface de chargement est effectuée sur la base d'au moins l'intervalle déterminé, **caractérisé en ce qu'**une évaluation de plusieurs images radar consécutives est effectuée pour détecter le bord et dans lequel, dans les images radar, au moins deux signaux renvoyés sont identifiés, pour lesquels les intervalles de réflexion se réduisent avec une vitesse représentant n fois la vitesse d'avancée et l'intervalle actuel à la surface de chargement est déterminée sur la base de la différence des signaux renvoyés identifiés.

2. Procédé selon la revendication précédente, **caractérisé en ce que** la vitesse d'avancée du processus de chargement est détectée de façon réglable et/ou constante pendant le processus de chargement et/ou le changement de position est détecté pendant le processus de chargement.

3. Procédé selon l'une des revendications précédentes, **caractérisé en ce que** le capteur radar est utilisé sur un engin de levage.

4. Procédé selon l'une des revendications précédentes, **caractérisé en ce que** le capteur radar est utilisé sur un dispositif de déplacement d'un engin de levage, en particulier ce qu'on appelle un chariot roulant, par exemple une grue.

5. Procédé selon l'une des revendications précédentes, **caractérisé en ce qu'**une pluralité de capteurs radar est utilisée pour commander le processus de chargement.

6. Procédé selon l'une des revendications précédentes, **caractérisé en ce que** pour détecter le bord, une évaluation d'au moins un premier second signal entrant au niveau de la pluralité de capteurs radar, représentant une réflexion d'un premier signal émis en direction de la surface de stockage, est effectuée, en particulier au moyen des images radar produites au même moment.

7. Procédé selon la revendication 6, **caractérisé en ce que** pour commander le processus de stockage au moyen d'au moins un capteur radar, des réflexions multiples du second signal entre la surface de stockage et le système de stockage sont évaluées.

8. Dispositif de positionnement de systèmes de stockage empilables, par exemple des conteneurs, des palettes, des cartons et autres systèmes similaires, sur une surface de stockage, en particulier des blocs empilés comme, par exemple, ce qu'on appelle un empilement de conteneurs, présentant des moyens de réalisation du procédé selon l'une des revendications précédentes.
